# EUROPÄISCHE PATENTSCHRIFT

(11) **EP 2 428 353 B1**
(45) Veröffentlichungstag und Bekanntmachung des Hinweises auf die Patenterteilung: **02.12.2015**
(21) Anmeldenummer: 10009554.6
(22) Anmeldetag: 14.09.2010
(51) Int. Cl.: B29C 70/52, B29C 70/54, B29C 70/74, E04C 3/29, B62D 29/00

(54) **Verfahren zum Verstärken eines Metallprofils mit einem faserverstärkten Kunststoff**
Method for reinforcing a metal profile with a fibre-reinforced plastic
Procédé de renforcement d'un profil métallique avec une matière synthétique renforcée en fibres

(43) Veröffentlichungstag der Anmeldung: 14.03.2012
(73) Patentinhaber: Karl Mayer Textilmaschinenfabrik GmbH, 63179 Obertshausen (DE)
(72) Erfinder: Ceko, Dino, 63073 Offenbach (DE); Franke, Oliver Dr., 64342 Seeheim-Jugenheim (DE)
(74) Vertreter: Knoblauch, Andreas

(56) Entgegenhaltungen:
- WO-A1-92/16347
- GB-A- 2 152 869
- US-A- 5 858 493

## Beschreibung

Die Erfindung betrifft ein Verfahren zum Verstärken eines Metallprofils mit einem faserverstärkten Kunststoff, bei dem man den faserverstärkten Kunststoff in eine Kammer des Metallprofils einbringt, wobei man ein Bündel aus Fasersträngen in einem Tränkbad mit dem Kunststoff tränkt und in die Kammer einbringt, solange der Kunststoff noch nicht ausgehärtet ist.

Ein Metallprofil mit einem faserverstärkten Kunststoff, der in eine Kammer des Metallprofils eingebracht worden ist, ist beispielsweise aus DE 20 2009 002 696 U1 bekannt. Hierzu wird das Metallprofil mit einer Kammer versehen, die zumindest an ihren beiden Stirnseiten offen ist, im Übrigen aber geschlossen sein kann. In diese Kammer wird die Verstärkungseinlage eingebracht, die durch vorzugsweise unidirektional verlaufende Fasern, insbesondere aus Kohlenstoff und/oder Glas, und eine diese umgebende Matrix gebildet ist. Diese Verstärkungseinlage wird in der Kammer fixiert, indem sie in der Kammer vergossen beziehungsweise verklebt wird.

In der Praxis geht man so vor, dass man in einem ersten Arbeitsgang Verstärkungseinlagen aus CFK-Profilen mittels Pultrusion herstellt. Die fertig ausreagierten CFK-Profile werden anschließend als Verstärkungslage in die geschlossene Kammer des Metallprofils eingebracht und verklebt. Diese Vorgehensweise ist relativ aufwendig und dadurch kostenintensiv. Außerdem ist es schwierig, sicherzustellen, dass die Verstärkungseinlage über die gesamte Länge des Metallprofils zuverlässig mit dem Metallprofil verbunden ist.

WO 92/16347 A1 zeigt ein Verfahren der eingangs genannten Art. Hier wird ein Faserbündel durch einen Trichter hindurch in ein Hohlprofil eingezogen, während gleichzeitig ein flüssiger Kunststoff in den Trichter gefüllt wird, wobei der Trichter in das Hohlprofil mündet.

Der Erfindung liegt die Aufgabe zugrunde, ein einfaches Verfahren zum Verstärken eines Metallprofils anzugeben.

Diese Aufgabe wird bei einem Verfahren nach Anspruch 1 dadurch gelöst, dass man das mit Kunststoff getränkte Bündel nach dem Verlassen des Tränkbades durch ein das Bündel verdichtendes Formwerkzeug führt und danach in die Kammer einbringt.

Mit dieser Vorgehensweise wird der noch nicht ausgehärtete Kunststoff gemeinsam mit den Fasersträngen in die Kammer des Metallprofils eingebracht. Der Kunststoff kann sich dann in der Kammer gleichmäßig verteilen und vor allem an der Innenseite der Kammer mit dem Metallprofil verbinden. Dadurch wird eine innige Verbindung zwischen den Fasern in dem Bündel und dem Metallprofil erreicht, und zwar auch dann, wenn das Metallprofil eine größere Länge hat. Derzeit sind Längen von 10 m oder mehr möglich. Die einzige Voraussetzung hierbei ist, dass sich der Kunststoff spätestens beim Aushärten mit dem Metall des Metallprofils verbindet. Dies ist jedoch bei vielen aushärtbaren Kunststoffen der Fall. Da man das Bündel noch in die Kammer einbringt, solange der Kunststoff noch nicht ausgehärtet ist, lässt sich das Einbringen des Bündels in die Kammer mit einer relativ geringen Kraft ausführen. Der Kunststoff setzt, solange er noch nicht ausgehärtet ist, die Reibung zwischen dem Bündel aus den Fasersträngen und der Wand der Kammer herab. Natürlich wird es eine gewisse Reibung geben, weil man bestrebt ist, die Kammer möglichst vollständig mit Fasersträngen auszufüllen. Die Reibung ist dennoch geringer als bei der Verwendung eines bereits ausgehärteten Formkörpers nach dem Stand der Technik. Eine gesonderte Herstellung eines derartigen Formkörpers mit Verstärkungsfasern und die nachträgliche Verklebung der Verstärkungseinlagen können entfallen. Wenn von Fasersträngen die Rede ist, dann können diese je nach Einsatzzweck als Endlosfasern ausgebildet sein. Sie können aber auch durch Stapelfasern gebildet werden, die eine ausreichende Verstärkung des Metallprofils sicherstellen. Das Formwerkzeug verdichtet das Bündel, so dass man sicherstellen kann, dass ein möglichst großer Teil des Querschnitts der Kammer mit Verstärkungsfasern ausgefüllt ist.

Vorzugsweise gibt man dem Bündel mit Hilfe des Formwerkzeugs eine Querschnittsform, die einem Querschnitt der Kammer entspricht. Das Formwerkzeug wirkt also formgebend, wobei die letztendlich erzielte Form im Querschnitt dem Querschnitt der Kammer entspricht. Da-bei ist es nicht erforderlich, diesen Querschnitt exakt zu erreichen, wenngleich dies natürlich vorteilhaft ist. Wenn sich der Kunststoff beim Aushärten etwas ausdehnt, dann kann es durchaus zulässig sein, wenn das Formwerkzeug den Querschnitt des mit Kunststoff getränkten Bündels etwas kleiner macht. In anderen Fällen kann eine geringfügige Übergröße günstig sein, wenn das Bündel dann beim Einbringen in die Kammer weiter komprimiert wird. Wenn aber in diesem Fall das Formwerkzeug nur eine kleine Übergröße erzeugt, dann wird das Einbringen des Bündels in die Kammer mit geringen Kräften möglich.

Vorzugsweise führt man das Bündel durch ein beheiztes Tränkbad. Im beheizten Tränkbad befindet sich der Kunststoff im nicht ausgehärteten Zustand. Da das Tränkbad beheizt ist, wird der Kunststoff ebenfalls auf eine erhöhte Temperatur gebracht. Viele Kunststoffe härten schneller aus, wenn sie erwärmt sind. Dies kann man ausnutzen, um die Aushärtezeit des Kunststoffs in der Kammer zu verkürzen.

Bevorzugterweise führt man das Bündel im Tränkbad über mehrere Umlenkrollen. Damit wird nicht nur sichergestellt, dass das Bündel vollständig im Tränkbad gehalten werden kann. Durch das mehrfache Umlenken werden die Faserstränge in gewisser Hinsicht auch gewalkt, so dass man sicherstellen kann, dass die Faserstränge des Bündels mit dem Kunststoff vollständig imprägniert sind.

Bevorzugterweise führt man vor dem Einbringen des getränkten Bündels in die Kammer ein Zugelement durch die Kammer, verbindet das Zugelement und das Bündel miteinander durch eine die Zugkraft übertragende Verbindung und zieht dann das Bündel mit Hilfe des Zugelements in die Kammer hinein. Man zieht das Bündel so weit in die Kammer hinein, dass das Zugelement auf der gegenüberliegenden Seite, also wenn das Bündel die Kammer vollständig ausfüllt, wieder entnommen werden kann, wenn das Zugelement nicht in der Kammer verbleiben kann. Das Ziehen des Bündels durch die Kammer hindurch ist ein relativ einfacher Vorgang, weil hier die Fasern nicht gestaucht, sondern nur auf Zug belastet werden. Die Fasern liegen dann in der Kammer in einem gestreckten Zustand vor. Dies ist der Zustand, in dem sie die größten Kräfte aufnehmen können.

Vorzugsweise verwendet man als Zugelement ein Seil. Ein Seil hat den Vorteil, dass es aufgewickelt werden kann. Das Band muss im Querschnitt nicht unbedingt kreisförmig sein. Es kann auch bandartig ausgebildet sein. Man benötigt daher auf der Seite, wo das Seil aus der Kammer herausgezogen wird, einen vergleichsweise kleinen Bauraum, der nur ausreichen muss, um eine Seiltrommel oder dergleichen anzuordnen, die angetrieben ist. An dem Seil kann man ein Verbindungselement befestigen. Dieses Verbindungselement kann, wenn das Metallprofil vertikal angeordnet ist, mit Hilfe der Schwerkraft durch die Kammer zum Bündel geführt werden. Wenn das Seil eine gewisse Steifigkeit aufweist, beispielsweise ein Drahtseil, dann reicht das Seil vielfach auch selbst aus, um durch die Kammer hindurch geschoben zu werden.

Vorzugsweise zieht man die Faserstränge mit einer Länge aus einem Vorrat ab, die einem geradzahligen Vielfachen der Länge der Kammer zuzüglich einer vorbestimmten Arbeitsreserve entspricht, fasst es unter Ausbildung mindestens eines Umkehrpunktes auf die Länge der Kammer zuzüglich der Arbeitsreserve zusammen und hängt das Zugelement im Umkehrpunkt ein. Im einfachsten Fall zieht man also das Bündel auf etwas mehr als das Doppelte der Länge der Kammer aus dem Vorrat ab, so dass zwei Äste des Bündels entstehen, die vom Umkehrpunkt ausgehen. Wenn man das Zugelement in den Umkehrpunkt einhängt, dann kann man das Bündel mit einer sehr hohen Kraft durch die Kammer hindurch ziehen. Es besteht keine Gefahr, dass das Zugelement vom Bündel abrutscht. Die Zugkraft kann fast so groß wie die Reißfestigkeit der Fasern des Bündels sein. Man kann daher dafür sorgen, dass die Fasern sehr dicht in der Kammer gepackt sind. Der Vorrat kann auf unterschiedliche Arten gebildet sein. Man kann beispielsweise Fasern von einer Vielzahl von Spulen abziehen und über Ösen zu Fasersträngen oder Rovings bündeln. In Abhängigkeit von den verwendeten Fasern kann der Abzug von den Spulten tangential oder über Kopf erfolgen. Im ersten Fall vermeidet man eine Verdrillung, im zweiten Fall erzielt man zusätzliche Verdrillung der Fasern. Man kann die Rovings auch vorfertigen und beispielsweise in Tonnen oder Behältern bereithalten. Dies richtet sich nach dem gewünschten Verwendungszweck.

Bevorzugterweise führt man das Bündel aus dem Vorrat bis zu einer Umlenkstelle und danach zurück zu einer Halteeinrichtung. Die Halteeinrichtung kann beispielsweise durch eine Klemmeinrichtung gebildet sein. Man kann dann das Zugelement an der Umlenkstelle in das Bündel einhängen. Das Ende des Bündels wird vom Vorrat abgetrennt und die Klemmvorrichtung wird gelöst. Mit Hilfe eines Antriebs, bei Verwendung eines Seils beispielsweise mit Hilfe einer Winde, zieht man das Bündel zunächst über Umlenkwalzen durch das beheizte Tränkbad und danach durch das formgebende Werkzeug und schließlich durch die Kammer des Metallprofils.

Eine Alternative hierzu besteht darin, dass man das Bündel im Bereich des Ausgangs des Vorrats befestigt und man das Bündel mit Hilfe einer Umlenkeinrichtung auf die Länge des Metallprofils zuzüglich der Arbeitsreserve auszieht. Hierzu kann man unter Umständen sogar das Zugelement an sich verwenden, so dass man einen weiteren Arbeitsschritt, nämlich das Verbinden des Zugelements mit dem Bündel, weglassen kann.

Die Erfindung wird im Folgenden anhand eines bevorzugten Ausführungsbeispiels in Verbindung mit der Zeichnung beschrieben. Hierin zeigen:
- Fig. 1: einen ersten Arbeitsschritt des Verfahrens,
- Fig. 2: einen zweiten Arbeitsschritt des Verfahrens und
- Fig. 3: einen dritten Arbeitsschritt des Verfahrens.

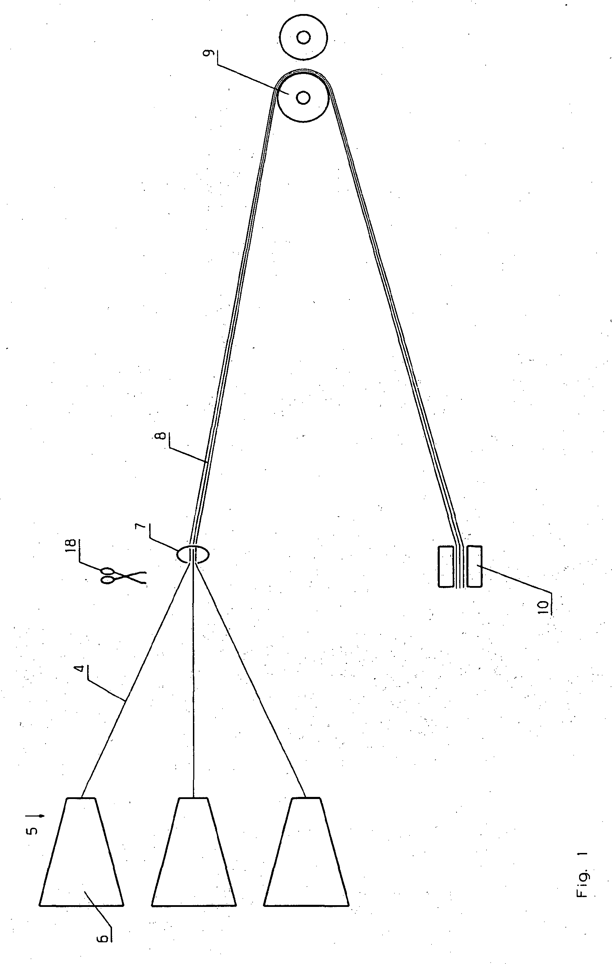

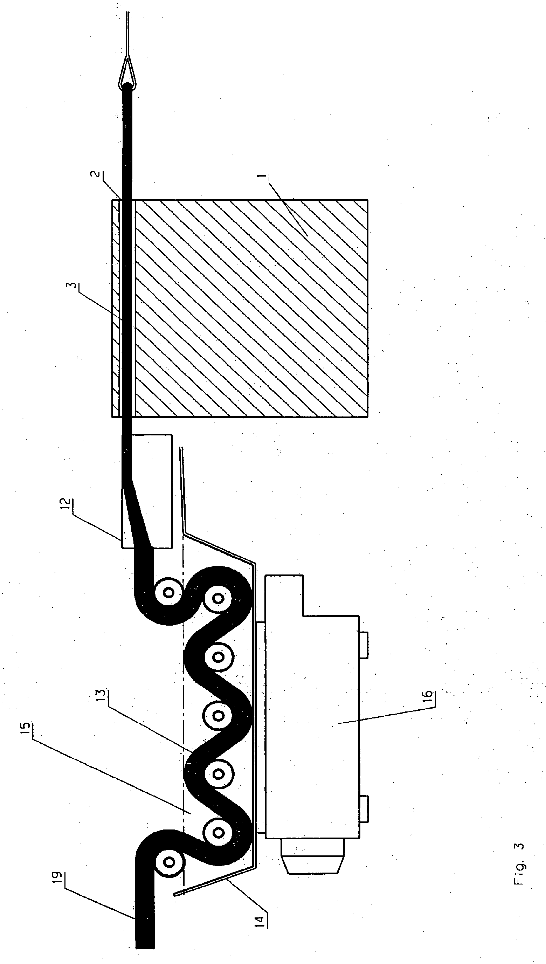

Das Verfahren dient dazu, ein eine Kammer aufweisendes Metallprofil 1, das in Fig. 3 schematisch dargestellt ist, mit einem faserverstärkten Kunststoff 3 zu verstärken. Hierzu wird der faserverstärkte Kunststoff 3 in der Kammer 2 angeordnet. Die dazu notwenigen Verfahrensschritte sind in den Fig. 1 bis 3 dargestellt. In allen Figuren sind gleiche Elemente mit den gleichen Bezugszeichen versehen.

Bei dem Metallprofil 1 kann es sich beispielsweise um ein Aluminiumprofil handeln, das durch Extrusion oder dergleichen hergestellt wird. Ein Beispiel für ein derartiges Metallprofil 1 ist in DE 20 2009 002 696 U1 dargestellt.

Wie in Fig. 1 zu erkennen ist, zieht man zunächst eine Mehrzahl von Fasern 4 aus einem Faservorrat 5 ab. Im Faservorrat 5 können beispielsweise mehrere Spulen 6 angeordnet sein, auf die die Fasern 4 aufgewickelt sind. Bei den Fasern 4 kann es sich um Kohlenstofffasern oder um Glasfasern handeln. Dargestellt ist ein Abziehen der Fasern 4 von den Spulen 6 über Kopf. Es ist aber auch ein tangentiales Abziehen möglich.

Die Fasern 4 werden beispielsweise durch eine Öse 7 zu Fasersträngen 8 oder Rovings gebündelt.

Man zieht die Faserstränge 8 nun auf eine Länge vom Vorrat 5 ab, die im vorliegenden Fall dem Doppelten der Länge der Kammer 2 des Metallprofils 1 plus einer Arbeitsreserve entspricht. Die Arbeitsreserve ist notwendig, um ein Bündel aus Fasersträngen handhaben zu können. Im vorliegenden Ausführungsbeispiel, bei dem man das Doppelte der Länge verwendet, weist das Bündel dann zwei Faserstränge auf. Natürlich kann man auch wesentlich mehr Faserstränge verwenden. Man kann die Faserstränge auch auf ein geradzahliges Vielfaches der oben erwähnten Länge abziehen, beispielsweise dem Vier-, Sechs- oder Achtfachen.

Die Faserstränge 8 werden über eine Umlenkrolle 9 geführt und von dort zurück zu einer Klemmeinrichtung 10. Dort werden die Enden der Faserstränge 8 fixiert, beispielsweise eingeklemmt.

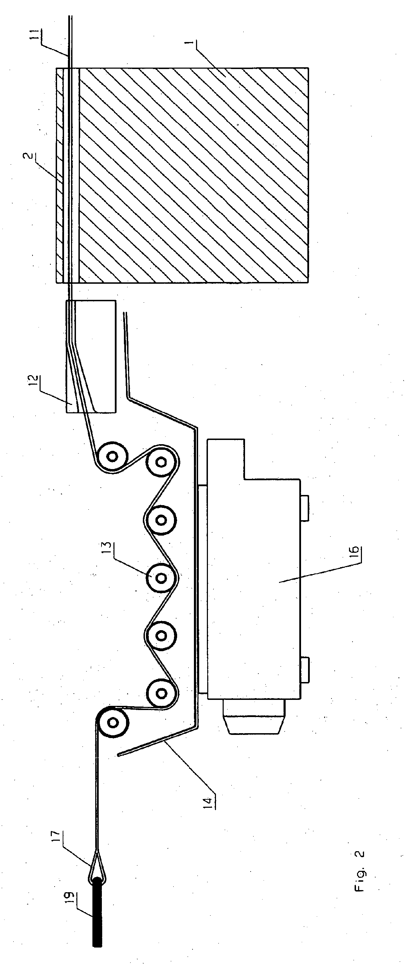

Ein Zugelement 11 in Form eines Zugseils (Fig. 2) wird durch die Kammer 2 des Metallprofils 1 geführt. Danach wird das Zugelement 11 durch ein formgebendes Werkzeug, das auch kurz als Formwerkzeug 12 bezeichnet wird, und über mehrere Umlenkrollen 13 durch eine Wanne 14, in der ein Tränkbad 15 (Fig. 3) angeordnet ist oder in der das Tränkbad 15 angeordnet werden kann, geführt. Die Wanne 14 ist mit einer Heizeinrichtung 16 versehen, so dass das Tränkbad 15 beheizt werden kann.

Das Zugelement 11 weist eine Öse 17 (oder einen verschließbaren Haken) auf. Die Öse 17 wird im Bereich der Umlenkrolle 9 mit den Fasersträngen 8 verbunden. Das Zugelement 11 wird auf Zug beansprucht.

Sobald die Faserstränge 8 unter Spannung gesetzt worden sind, wird die Klemmeinrichtung 10 gelöst und die Faserstränge 8 werden durchtrennt. Eine Trenneinrichtung 18 ist in Fig. 1 schematisch dargestellt. Wenn das Zugelement 11 weiter gezogen wird, vereinigen sich die Faserstränge 8 zu einem Bündel 19. Dieses Bündel 19 wird mit Hilfe des Zugelements 11 zunächst durch das Tränkbad 15 gezogen. Im Tränkbad 15 befindet sich ein aushärtbarer Kunststoff, der durch die Heizeinrichtung 16 bereits auf eine erhöhte Temperatur gebracht worden ist. Durch das mehrfache Umlenken über die Umlenkrollen 13 wird das Bündel 19 gewalkt und mehrfach verformt, so das sichergestellt ist, dass es innig mit dem Kunststoff aus dem Tränkbad 15 getränkt ist.

Nach dem Verlassen des Tränkbads 15 wird das getränkte Bündel 19 dann durch das Formwerkzeug 12 geführt. Im Formwerkzeug 12 wird das Bündel 19 verdichtet. Überflüssiger Kunststoff kann zurück in das Tränkbad 15 laufen. Das Formwerkzeug 12 kann darüber hinaus verwendet werden, um dem getränkten Bündel 19 eine Querschnittsform zu vermitteln, die der Querschnittsform der Kammer 2 entspricht. Die Querschnittsform der Kammer 2 ist über ihre gesamte Länge im Wesentlichen konstant. Kleiner Abweichungen sind unschädlich. Es ist auch unschädlich, wenn die Kammer 2 Innenwände mit einer größeren Rauhigkeit hat.

Natürlich muss das Formwerkzeug 12 nicht exakt die Querschnittform der Kammer 2 erzeugen. Je nach den verwendeten Fasern 4 und dem verwendeten Kunststoff aus dem Tränkbad 15 kann es sinnvoll sein, den Querschnitt des durch das Formwerkzeug 12 geführten Bündels 19 etwas größer oder etwas kleiner als den Querschnitt der Kammer 2 zu machen. Wenn beispielsweise der Kunststoff beim Aushärten dazu neigt, sein Volumen zu vergrößern, kann es sinnvoll sein, dien Querschnitt des Bündels 19 etwas kleiner als den Querschnitt der Kammer 2 zu wählen. Wenn man erreichen möchte, dass das getränkte Bündel 19 mit einem gewissen Überschuss durch die Kammer 2 gezogen werden soll, um die Fasern beim Einziehen weiter zu verdichten, dann ist es sinnvoll, den Querschnitt des getränkten Bündels 19 etwas größer als den Querschnitt der Kammer 2 zu machen.

Sobald das getränkte Bündel 19 durch die Kammer 2 hindurch geführt worden ist, hat das hintere Ende des Bündels 19 das Tränkbad 15 verlassen. Dies wird dadurch realisiert, dass man zuvor die richtige Länge eingestellt hat (Fig. 1). Die Darstellung der Fig. 3 wurde gewählt, um die Erläuterung zu erleichtern.

Das Metallprofil kann dann an eine andere Position verbracht werden, wo der Kunststoff des Bündels 19 aushärtet. Beim Aushärten verklebt der Kunststoff gleichzeitig mit dem Metallprofil 1. Nach dem Aushärten oder Ausreagieren ist das Bündel 19 innig, d.h. unlösbar mit dem Metallprofil 1 verklebt. Die Verklebung erfolgt dabei mit einer relativ großen Sicherheit über die gesamte Länge des Metallprofils 1, so dass das Metallprofil 1 aufgrund der Verstärkung durch die Fasern 4 hochbelastbar wird.

Man kann die Vorbereitung des Bündels 19 auch abweichend von Fig. 1 gestalten. In diesem Fall entnimmt man ein Faserbündel 8 aus dem Vorrat 5 und führt es direkt zur Klemmeinrichtung 10. Anstelle einer stationären Umlenkrolle 9 nimmt man eine bewegbare Umlenkrolle oder ein anderes Umlenkelement, beispielsweise die Öse 17 des Zugelements 11 und verbindet sie mit dem Faserstrang 8. Wenn man dann das Zugelement vom Vorrat wegzieht, dann ergibt sich sozusagen die doppelte Länge des Faserstrangs 8, der dann zum Bündel 19 zusammengefasst werden kann.

Dargestellt ist ein Vorgehen, bei dem man ein Bündel 19 durch ein einfaches Falten des Faserstrangs 8 erhält, also ein Bündel mit einem einzigen Umkehrpunkt. Wenn man beispielsweise die vier-, sechs- oder achtfache Länge des Metallprofils 1 vom Vorrat 5 abzieht, dann kann man eine entsprechend größere Anzahl von Umlenkstellen realisieren, d.h. ein Bündel aus einer größeren Anzahl von Fasersträngen. Auch in diesem Fall wird eine einzige Öse 17 ausreichen, um dieses komplexere Bündel durch die Kammer 2 des Metallprofils 1 hindurch zu ziehen.

Das Ziehen des Faserbündels 19 hat den großen Vorteil, dass die Fasern dabei gestreckt gehalten werden. Sie füllen die Kammer 2 also in einem gestreckten Zustand aus, was dem Metallprofil 1 eine zusätzliche Zugfestigkeit in diesem Bereich vermittelt.

## Patentansprüche

1. Verfahren zum Verstärken eines Metallprofils (1) mit einem faserverstärkten Kunststoff (3), bei dem man den faserverstärkten Kunststoff in eine Kammer (2) des Metallprofils (1) einbringt, wobei man ein Bündel (19) aus Fasersträngen (8) in einem Tränkbad (15) mit dem Kunststoff tränkt und in die Kammer (2) einbringt, solange der Kunststoff noch nicht ausgehärtet ist, **dadurch gekennzeichnet, dass** man das mit Kunststoff getränkte Bündel (19) nach dem Verlassen des Tränkbades (15) durch ein das Bündel (19) verdichtendes Formwerkzeug (12) führt und danach in die Kammer (2) einbringt.

2. Verfahren nach Anspruch 1, **dadurch gekennzeichnet, dass** man dem Bündel (19) mit Hilfe des Formwerkzeugs (12) eine Querschnittsform gibt, die einem Querschnitt der Kammer (2) entspricht.

3. Verfahren nach Anspruch 1 oder 2, **dadurch gekennzeichnet, dass** man das Bündel (19) durch ein beheiztes Tränkbad (15) führt.

4. Verfahren nach Anspruch 3, **dadurch gekennzeichnet, dass** man das Bündel (19) im Tränkbad (15) über mehrere Umlenkrollen (13) führt.

5. Verfahren nach einem der Ansprüche 1 bis 4, **dadurch gekennzeichnet, dass** man vor dem Einbringen des getränkten Bündels (19) in die Kammer (2) ein Zugelement (11) durch die Kammer führt, das Zugelement (11) und das Bündel (19) miteinander durch eine die Zugkraft übertragende Verbindung (17) verbindet und dann das Bündel (19) mit Hilfe des Zugelements (11) in die Kammer (2) hineinzieht.

6. Verfahren nach Anspruch 5, **dadurch gekennzeichnet, dass** man als Zugelement (11) ein Seil verwendet.

7. Verfahren nach Anspruch 5 oder 6, **dadurch gekennzeichnet, dass** man die Faserstränge (8) mit einer Länge aus einem Vorrat (5) abzieht, die einem geradzahligen Vielfachen der Länge der Kammer (2) zuzüglich einer vorbestimmten Arbeitsreserve entspricht, unter Ausbildung mindestens eines Umkehrpunktes auf die Länge der Kammer (2) zuzüglich der Arbeitsreserve zusammenfasst und das Zugelement (11) im Umkehrpunkt einhängt.

8. Verfahren nach Anspruch 7, **dadurch gekennzeichnet, dass** man das Bündel (19) aus dem Vorrat bis zu einer Umlenkstelle (9) und danach zurück zu einer Halteeinrichtung (10) führt.

9. Verfahren nach Anspruch 7, **dadurch gekennzeichnet, dass** man das Bündel (19) im Bereich des Ausgangs des Vorrats (5) befestigt und man das Bündel (19) mit Hilfe einer Umlenkeinrichtung auf die Länge des Metallprofils (1) zuzüglich der Arbeitsreserve auszieht.

## Claims

1. Method for reinforcing a metal profile (1) with a fibre-reinforced plastic (3), wherein the fibre-reinforced plastic is introduced into a chamber (2) of the metal profile (1), in which a bundle (19) of lengths of fibre (8) is impregnated with the plastic in an impregnating bath (15) and is introduced into the chamber (2), as long as the plastic has not yet cured, **characterised in that**, after leaving the impregnating bath (15), the bundle (19) impregnated with plastic is passed through a moulding tool (12) which compacts the bundle (19) and the bundle (19) is then introduced into the chamber (2).

2. Method according to claim 1, **characterised in that** a cross-sectional shape which corresponds to a cross-section of the chamber (2) is imparted to the bundle (19) by means of the moulding tool (12).

3. Method according to claim 1 or 2, **characterised in that** the bundle (19) is passed through a heated impregnating bath (15).

4. Method according to claim 3, **characterised in that** the bundle (19) is passed through a plurality of guide rollers (13) in the impregnating bath (15).

5. Method according to one of claims 1 to 4, **characterised in that** before the impregnated bundle (19) is introduced into the chamber (2) a pulling element (11) is passed through the chamber, the pulling element (11) and the bundle (19) are attached to one another by a connection (17) which transmits the pulling force and then the bundle (19) is pulled into the chamber (2) by means of the pulling element (11).

6. Method according to claim 5, **characterised in that** a cable is used as the pulling element (11).

7. Method according to claim 5 or 6, **characterised in that** the lengths of fibre (8) are pulled from a stockpile (5) to a length which corresponds to an evennumbered multiple of the length of the chamber (2) plus a pre-defined working reserve, the lengths of fibre are held together over the length of the chamber (2) plus the working reserve, forming at least one deflection point, and the pulling element (11) is attached to the turning point.

8. Method according to claim 7, **characterised in that** the bundle (19) is guided from the stockpile to a deflection point (9) and then back to a retaining device (10).

9. Method according to claim 7, **characterised in that** the bundle (19) is attached in the region of the exit from the stockpile (5) and the bundle (19) is pulled out to the length of the metal profile (1) plus the working reserve by means of a deflecting device.

## Revendications

1. Procédé de renforcement d'un profilé métallique (1) avec une matière synthétique (3) renforcée par des fibres, selon lequel on introduit la matière synthétique renforcée par des fibres dans une chambre (2) du profilé métallique (1), un faisceau (19) de fibres (8) étant imprégné avec la matière synthétique dans un bain d'imprégnation (15) et étant introduit dans la chambre (2) tant que la matière synthétique n'est pas encore durcie, **caractérisé en ce que** l'on guide le faisceau (19) imprégné de matière synthétique, après sa sortie du bain d'imprégnation (15), à travers un outil de mise en forme (12) comprimant le faisceau (19) puis on l'introduit dans la chambre (2).

2. Procédé selon la revendication 1, **caractérisé en ce que**, à l'aide de l'outil de mise en forme (12), on donne au faisceau (19) une forme de section transversale qui correspond à une section transversale de la chambre (2).

3. Procédé selon la revendication 1 ou 2, **caractérisé en ce que** l'on guide le faisceau (19) à travers un bain d'imprégnation (15) chauffé.

4. Procédé selon la revendication 3, **caractérisé en ce que** l'on guide le faisceau (19) dans le bain d'imprégnation (15) par l'intermédiaire de plusieurs rouleaux de renvoi (13).

5. Procédé selon l'une des revendications 1 à 4, **caractérisé en ce que**, avant l'introduction du faisceau imprégné (19) dans la chambre (2), on guide un élément de traction (11) à travers la chambre, on assemble l'élément de traction (11) et le faisceau (19) l'un à l'autre au moyen d'une liaison (17) transmettant la force de traction puis on tire le faisceau (19) dans la chambre (2) à l'aide de l'élément de traction (11).

6. Procédé selon la revendication 5, **caractérisé en ce que** l'on utilise un câble comme élément de traction (11).

7. Procédé selon la revendication 5 ou 6, **caractérisé en ce que** l'on tire d'une réserve (5) les fibres (8) d'une longueur qui correspond à un multiple pair de la longueur de la chambre (2) plus une marge de travail prédéterminée, on les réunit en formant au moins un point de rebroussement à la longueur de la chambre (2) plus la marge de travail et on accroche l'élément de traction (11) au niveau du point de rebroussement.

8. Procédé selon la revendication 7, **caractérisé en ce que** l'on guide le faisceau (19) hors de la réserve jusqu'à un point de rebroussement (9) puis on le fait revenir à un dispositif de fixation (10).

9. Procédé selon la revendication 7, **caractérisé en ce que** l'on fixe le faisceau (19) dans la zone de la sortie de la réserve (5) et on tire le faisceau (19) à l'aide d'un dispositif de renvoi jusqu'à la longueur du profilé métallique (1) plus la marge de travail.
